Europäisches Patentamt

European Patent Office

Office européen des brevets

(19)

(11) Publication number: **0 274 144 B1**

(12) **EUROPEAN PATENT SPECIFICATION**

(45) Date of publication of patent specification: **22.01.92**　(51) Int. Cl.⁵: **F01N 7/18**

(21) Application number: **87202276.9**

(22) Date of filing: **20.11.87**

(54) **Flexibilized silencer.**

(30) Priority: **03.12.86 IT 2255586**

(43) Date of publication of application:
**13.07.88 Bulletin  88/28**

(45) Publication of the grant of the patent:
**22.01.92 Bulletin  92/04**

(84) Designated Contracting States:
**DE FR GB**

(56) References cited:
**EP-A- 0 118 842
FR-A- 2 416 414
US-A- 4 315 558
US-A- 4 540 064**

**PATENT ABSTRACTS OF JAPAN, vol. 10, no.
115 (M-474)[2172], 30th April 1986; & JP-A-60
247 005 (IMAKOU SEISAKUSHO K.K.)
06-12-1985**

**PATENT ABSTRACTS OF JAPAN, vol. 9, no.
183 (M-400)[1906], 30th July 1985; & JP-A-60
50 215 (HONDA GIKEN KOGYO K.K.)
19-03-1985**

(73) Proprietor: **ALFA LANCIA S.p.A.
Viale Alfa Romeo
I-20020 Arese, Milan(IT)**

(72) Inventor: **Ferraris, Francesco
Via Matteotti 32
I-20020 Arese Milan(IT)**

(74) Representative: **De Carli, Erberto et al
ING. BARZANO' & ZANARDO MILANO S.p.A.
Via Borgonuovo, 10
I-20121 Milano(IT)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention is concerned with a flexibilized silencer in an exhaust system of an internal combustion engine of an automotive vehicle.

It is known that during the running, to an internal combustion engine alternating forces and largely variable torques are applied, which produce strong vibrations and tossings of the structure of the same engine.

These vibrations and tossings are only partially transmitted to the bodywork of the automotive vehicle through elastic supports, which perform the task of filtering a portion of the vibrations.

On the contrary, the vibrations and tossings of the engine are nearly integrally transmitted to the ducts of the exhaust system through the exhaust manifold, which is rigidly fastened to the head of the same motor.

The exhaust ducts are elastically suspended to the bodywork, so, due to the excitations at different frequencies, prevailingly coming from the engine, they result to be fatigue stressed in the different sections.

These stresses are particularly heavy if the engine is positioned transversely, and the exhaust ducts are arranged in a longitudinal direction, with the engine undergoing, due to the torque changes, even rather wide angular tossings around the axis of its shaft. In case of such an arrangement, it happens that the manifold undergoes corresponding wide oscillatory shifts relatively to its end, exactly in the direction in which the elasticity of the same ducts is minimum, so that fatigue breakages can be easily experienced.

In order to solve these problems, in the prior art it has already been proposed to insert in the exhaust ducts flexible elements, constituted by undulated-wall metal pipes, which allow a portion of the ducts to freely oscillate with the engine, avoiding that that portion of the exhaust ducts, which is constrained to the bodywork, undergoes fatigue stresses, and which also act as a filter for the vibrations between the two branches of the exhaust ducts, to which the flexible pipes are connected.

Generally, these undulated-wall exhaust ducts are inserted in the connection exhaust ducts, often formed by separate branches, downstream the manifold, and upstream the common exhaust duct comprising the silencers, because it is suitable that the flexible elements are located as close as possible to the engine.

As a consequence, these solutions result rather complex and expensive, if the exhaust ducts show a rather extensive branching before merging into the common duct.

Furthermore, the presence of undulated-wall pipes can penalize to a more or less considerable extent the performance of the engine, because it tends to increase the engine exhaust back pressures and, due to the slight expansion, partially modifies the resonance conditions of the concerned duct length.

US-A-4 540 064 relates to a noise and vibration reducing apparatus. This apparatus comprises a flexible bellows, fixed to respective end portions of two exhaust conduits, and a protection element which covers the bellows.

In this case, the noise should be avoided by the interposition of a hollow middle portion which forms a cylindrical expansion chamber. However such disposition does not avoid in a suitable manner noise and vibrations.

Further, in such a device the protection element can be damaged by the friction of the corrugated portions of the bellows due to vibrations.

In order to avoid this abrasive wear action, FR-A-2 416 414 teaches to insert parts between the flexible bellows and the protection element in the apparatus according to US-A-4 540 064.

This particular disposition, while on the one hand it improves the working and life conditions of the apparatus, on the other hand it does not avoid the noise and vibrations.

The JP-A-60 247 005 relates to a silencer which should overcome ther aforesaid drawback.

The provision of two concentrical bellows containing an acoustic material improves the silencing friction. On the contrary the provision of two bellows, which identify a gap filled with an acoustic material, makes rigid the apparatus and worsens its flexibility.

This rigidity is increased by the acoustic material inserted into the crests of the bellows.

The purpose of the present invention is to provide a simpler and less expensive solution than the solutions known from the prior art, which also shows the advantage of being less binding as relates to the definition of the layout, or of the overall dimensions design, of the exhaust system, besides improving the shape of the engine torque curve.

This purpose is achieved according to the present invention by integrating two functions in one component only, and precisely by designing a silencer, which also acts as a flexible element, according to claim 1.

Therefore, such a silencer, as above defined, with the skirt comprising flexible elements, allows the two lengths of the exhaust duct to move independently from one another, and als acts as a filter for the vibrations between the said first length and the said second length of the exhaust duct. Furthermore, this silencer can be located in the common exhaust duct, immediately downstream the point of junction of the connection ducts.

Characteristics and advantages of the invention are now better illustrated by referring to the hereto attached drawing, wherein, for non-limitative exemplifying purposes, a preferred form of practical embodiment of the same invention is shown.

In the drawing:

Figure 1 shows a side view of an internal combustion engine, equipped with an exhaust system with a silencer according to the present invention;

Figure 2 shows a top view of a detail of Figure 1;

Figure 3 shows an enlarged, longitudinal sectional view of the silencer of Figure 1;

Figures 4 and 5 show, still in longitudinal section, structural variants of the silencer of Figure 3.

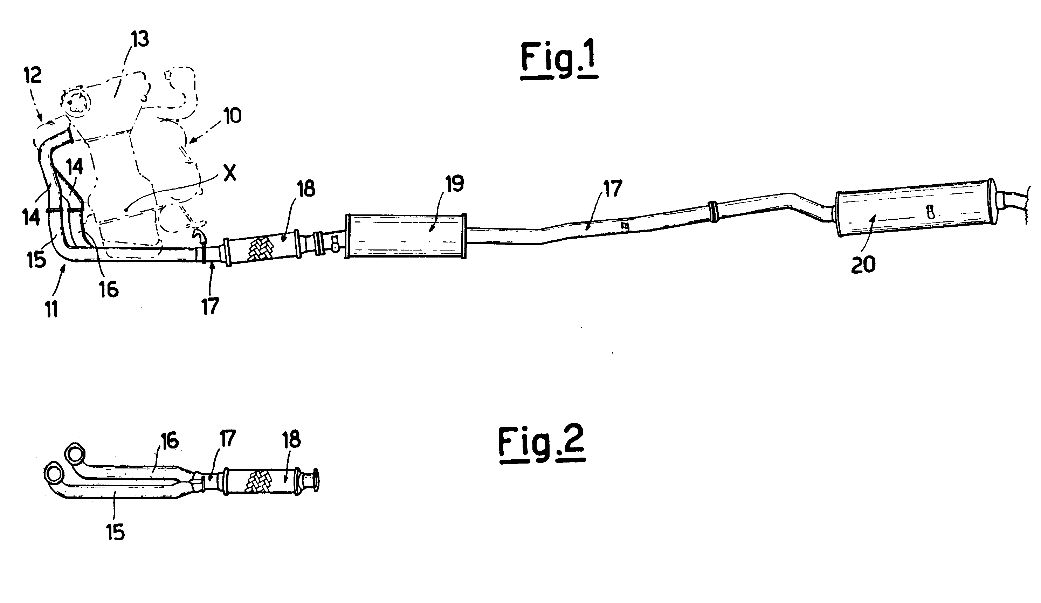

In Figure 1, generally represented by chains is an internal combustion engine 10 of a front-wheel drive automotive vehicle. The four-cylinder, in-line engine 10 is transversely positioned, oriented along the track "X" axis of its shaft, and its exhaust system, generally indicated by the reference numeral 11, is formed by substantially longitudinally arranged ducts.

In Figure 1, by the reference numeral 12 the exhaust manifold is indicated, which is fastened to the engine head 13, and is formed by individual ducts 14 connected with the respective cylinders. The ducts 14 merge, two-by-two, into the exhaust ducts 15 and 16 which, in their turn, lead to a common exhaust duct, generally indicated by the reference numeral 17, as also shown in Figure 2.

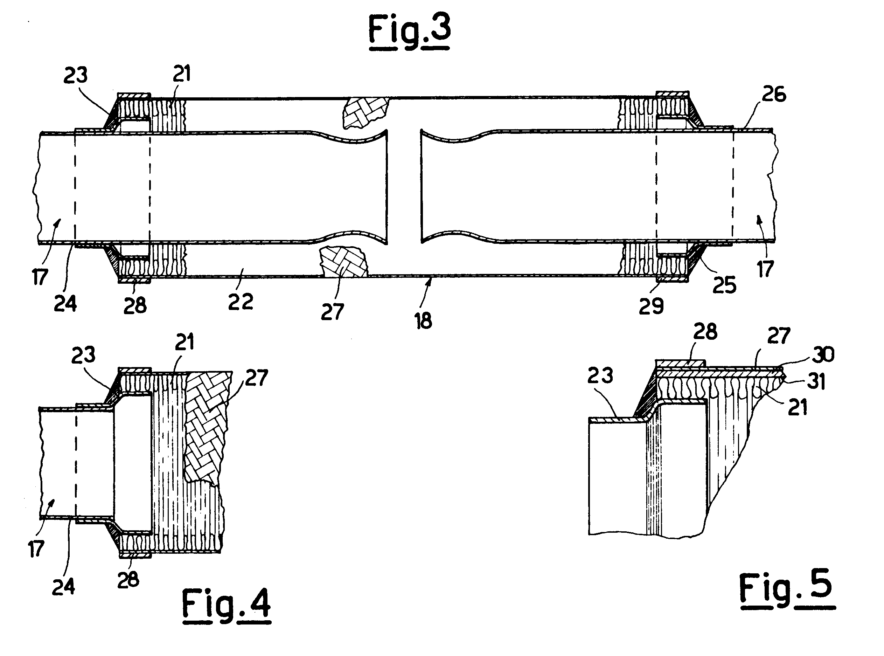

In the duct 17, which is formed by several lengths, the silencers are located, which are respectively indicated by the reference numerals 18, 19, 20. The silencer 18, shown in detail in Figure 3, is of the reflection type, and is provided with a skirt 21 formed by a substantially cylindrical wall of undulated metal sheet or flexible bellows, enclosing an expansion chamber 22.

The wall of the bellows 21 is welded, at an end, to a connection collar, indicated by the reference numeral 23, which in its turn is welded to the length 24 of the duct 17, which leads the engine exhaust gases into the silencer 18. The same wall of the bellows 21 is welded, at its other end, to another connection collar, indicated by the reference numeral 25, which in its turn is welded to the length 26 of the duct 17, leading the exhaust gases out from the silencer 18.

By the reference numeral 27, indicated is a plaited network which externally surrounds the undulated wall 21, to protect and contain it, and which is fastened at its end by the metal rings 28 and 29, which are welded to the ends of the bellows wall 21.

The silencer 18, when through it the engine exhaust gases flow, performs a function of noise attenuation, and contributes to optimize the engine torque, due to the expansion which a portion of the same gases undergoes inside the chamber 22.

At the same time, the silencer also performs a function of flexibilization of the exhaust system ducts, because it allows the manifold 12, the ducts 15 and 16, and the length 24 of the duct 17, to move relatively to the length 26 of the duct 17, and, consequently, to freely follow the oscillations of the engine around its axis X, also acting as a filter for the vibrations, relatively to the length 26 of the duct 17.

The silencer shown in Figure 4 differs from that shown in Figure 3, only in that the lengths 24 and 26 of the duct 17 are shorter; the length 26 is exactly specularly equal to length 24, and therefore it has not been shown.

Should it be necessary to increase the deadening effect of the silencer, between the undulated portion 21 and the protection element 27 a deadening material could be inserted, as shown in the partial sectional view of Figure 5, wherein a layer of a ceramic material 30, contained by a network 31, surrounds the undulated wall 21 of the silencer.

## Claims

1. Flexibilized silencer in an exhaust system (11) of an internal combustion engine (10) of an automotive vehicle, the exhaust system (11) comprising a first exhaust conduit fixed to the engine (10) for conducting the exhaust gases from the engine (10) and a second exhaust conduit for venting the exhaust gases, the silencer comprising one flexible bellows (21) fixed to respective end portions (24, 26) of the first and second exhaust conduits and covered by a protection element (27), characterized in that a deadening layer (30) is provided, interposed between the protection element (27) and the bellows (21), which surrounds external crests of the bellows (21) according to an envelope surface, between said layer (30) and the bellows (21) a network being interposed.

2. Flexibilized silencer according to claim 1, wherein the bellows (21), the deadening layer (30) and the protection element (27) are fixed at their respective end portions to two collars (23, 25) having a diameter larger than the diameter of said end portions (24, 26) of the exhaust conduits, said collars being rigid with and projecting from these end portions of the exhaust conduits.

3. Flexibilized silencer according to claim 1 or 2, wherein the end portions of the deadening layer (30) and of the protection element (27) are fixed to the bellows (21) through metal rings (28, 29).

4. Flexibilized silencer according to anyone of the preceding claims, wherein the deadening layer (30) is a layer of ceramic material.

5. Flexibilized silencer according to anyone of the preceding claims, wherein the bellows (21) is formed by a wall made from an at least partially undulated metal sheet.

6. Flexibilized silencer according to anyone of the preceding claims, wherein the protection element (27) is a braided wire.

**Revendications**

1. Silencieux flexible pour système d'échappement (11) d'un moteur à combustion interne (10) d'un véhicule automobile, le système d'échappement (11) comprenant un premier conduit d'échappement fixé au moteur (10) pour recueillir les gaz d'échappement du moteur (10) et un second conduit d'échappement pour évacuer les gaz d'échappement, le silencieux comprenant un soufflet flexible (21) fixé à des parties d'extrémité respectives (24, 26) du premier et du second conduit d'échappement et recouvert par un élément de protection (27), caractérisé en ce qu'il est prévu une couche d'absorption (30), disposée entre l'élément de protection (27) et le soufflet (21), qui entoure les crêtes externes du soufflet (21) suivant une surface d'enveloppe, un filet étant disposé entre ladite couche (30) et le soufflet (21).

2. Silencieux flexible selon la revendication 1, dans lequel le soufflet (21), la couche d'absorption (30) et l'élément de protection (27) sont fixés à leurs parties d'extrémité respectives à deux colliers (23, 25) dont le diamètre est supérieur au diamètre desdites parties d'extrémité (24, 26) des conduits d'échappement, lesdits colliers étant reliés rigidement à ces parties d'extrémité des conduits d'échappement et faisant saillie de celles-ci.

3. Silencieux flexible selon la revendication 1 ou 2, dans lequel les parties d'extrémité de la couche d'absorption (30) et de l'élément de protection (27) sont fixées au soufflet (21) par l'intermédiaire de bagues métalliques (28, 29).

4. Silencieux flexible selon l'une quelconque des revendications précédentes, dans lequel la couche d'absorption (30) est une couche de matériau céramique.

5. Silencieux flexible selon l'une quelconque des revendications précédentes, dans lequel le soufflet (21) est formé par une paroi constituée par une feuille métallique au moins partiellement ondulée.

6. Silencieux flexible selon l'une quelconque des revendications précédentes, dans lequel l'élément de protection (27) est un fil métallique tressé.

**Patentansprüche**

1. Biegsamer Schalldämpfer in einem Auspuffsystem (11) einer Verbrennungskraftmaschine (10) eines Kraftfahrzeuges, wobei das Auspuffsystem (11) ein erstes am Motor (10) festgelegtes Auspuffrohr zum Ableiten der Abgase vom Motor (10) und ein zweites Auspuffrohr zum Ausbringen der Abgase umfaßt und wobei der Schalldämpfer einen flexiblen Balg (21) umfaßt, der an entsprechenden Endbereichen (24,26) des ersten und zweiten Auspuffrohres festgelegt ist und von einem Schutzelement (27) umgeben ist, dadurch gekennzeichnet, daß eine schalldämmende Lage (30) zwischen dem Schutzelement (27) und dem Balg (21) vorgesehen ist, welche die außenliegenden Scheitel des Balges (21) längs einer umhüllenden Fläche umgibt, wobei ein Netzwerk zwischen der Lage (30) und dem Balg (21) angeordnet ist.

2. Biegsamer Schalldämpfer nach Anspruch 1, wobei der Balg (21), die schalldämmende Lage (30) und das Schutzelement (27) an ihren entsprechenden Endbereichen an zwei Ringen (23,25) befestigt sind, welche einen größeren Durchmesser als den Durchmesser der Endbereiche (24,26) der Auspuffrohre aufweisen, wobei die Ringe starr mit den Auspuffrohren verbunden sind und von den Endbereichen derselben vorragen.

3. Biegsamer Schalldämpfer nach Anspruch 1 oder 2, wobei die Endbereiche der schalldämmenden Lage (30) und des Schutzelementes (27) am Balg (21) durch Metallringe (28,29) befestigt sind.

4. Biegsamer schalldämpfer nach einem der vorangehenden Ansprüche, wobei die schalldämmende Lage (30) eine Lage aus keramischem Material ist.

5. Biegsamer Schalldämpfer nach einem der vorangehenden Ansprüche, wobei der Balg (21) von einer Wand aus einem wenigstens teilweise gewellten Metallblech gebildet ist.

6. Biegsamer Schalldämpfer nach einem der vorangehenden Ansprüche, wobei das Schutzelement (27) ein verflochtener Draht ist.

# Fig.1

# Fig.2

EP 0 274 144 B1

# Fig.3

# Fig.4

# Fig.5

EP 0 274 144 B1